# EUROPEAN PATENT SPECIFICATION

(11) **EP 0 835 615 B1**
(45) Date of publication and mention of the grant of the patent: **28.08.2002**
(21) Application number: 97203082.9
(22) Date of filing: 07.10.1997
(51) Int. Cl.: A23L 3/36, A23G 9/28, A23G 9/14

(54) **Freezing of shaped portions or pellets of sauce**
Tiefkühlung von Portionen- oder Teilchen-förmigen Dressingsossen
Congélation de portions ou morceaux de sauce préformés

(30) Priority: 08.10.1996 EP 96202790
(43) Date of publication of application: 15.04.1998
(73) Proprietor: SOCIETE DES PRODUITS NESTLE S.A., 1800 Vevey (CH); Sudnif S.A., 6301 Zug (CH)
(72) Inventor: Andersson, Bo, 230 30 Oxie (SG); Olofsson, Mats, 266 97 (SE)
(74) Representative: Ahlberg, Lena Camilla

(56) References cited:
- EP-A- 0 332 287
- GB-A- 1 016 574
- US-A- 4 748 029
- US-A- 4 761 962
- US-A- 4 906 486
- US-A- 4 929 456
- US-A- 4 934 928
- US-A- 5 257 510
- PATENT ABSTRACTS OF JAPAN vol. 8, no. 24 (C-208), 2 February 1984 & JP 58 190348 A (NIHON SUISAN), 7 November 1983,

## Description

The present invention relates to a method of freezing pellets or portions of sauce, in particular to a method for freezing pellets or portions which is advantageous for the freezing of sauce which comprises starch. The invention also relates to frozen sauce pellets or portions obtainable by said method.

Frozen sauce is e.g. used in frozen ready meals or in catering services. Conventionally, the sauce is either dosed directly onto the meal and frozen together with it, or frozen into blocks separately. Frozen sauce may also be in pellet form and is then e.g. used in meals comprising individual frozen cubes of meat and vegetables. Such meals are usually prepared by panfrying.

The prior art sauce pellets or portions are frozen in moulds or by dosing droplets of sauce onto a freezing surface. When freezing of pellets in moulds, substantial work is involved in filling, emptying and cleaning the moulds. Freezing of sauce pellets by dosing it onto a freezing surface gives flat and irregular pellet shapes.

When providing a frozen sauce it is important that once the sauce is thawed, it remains substantially unchanged when compared to the unfrozen sauce. For example, the viscosity of the sauce should not substantially change. The amount of starch in the sauce is determining for the viscosity of the sauce. If the sauce is subjected to too severe a mechanical contact, the starch molecules will be damaged.

It is known to freeze liquid food products in ice-cream freezers, a process which is used in sorbet and ice-cream production. Ice-cream freezers are freezers with cooling heat exchange surfaces with scrapers moving the food product to and from the cooling surfaces. Such freezers may be unsuitable for the freezing of sauce as the freezing and scraping process may damage the starch molecules in the sauce, resulting in a thawed sauce which has a lower viscosity than a similar sauce that has not gone through the ice-cream freezing process. This can require an extra step where starch is must be added to the thawed sauce to increase the viscosity to the desired level.

Ice-cream machines of the type in question are described in US patent 4,761,962 in the name of Frigoscandia concerning freezing of pellets by agitating the food product while cooling it, and GB patent 1,016,574 in the name of A. Johnson concerning freezing of fruit pulp in a cooled scrape surface heat exchanger.

Use of ice-cream freezers with scrapers may also be undesirable for sauces with particles or lumps of vegetables, meat or fish. The scrapers may provide a milling of the particles and the more finely distributed particles may result in a colour change of the sauce.

It is an aim of the invention to provide a method for freezing pellets of sauce, which does not substantially change the viscosity of the re-heated sauce. The invention aims to freeze pellets of sauce in a manner which does not substantially damage the starch molecules so that the re-heated sauce has substantially the same consistency as the sauce prior to freezing.

Accordingly, the present invention provides a method for freezing pellets of sauce, said method comprising
dosing a layer of sauce onto a freezing surface,
partly freezing said sauce on said surface to cause a generation of ice crystals and an increase in the viscosity of the unfrozen sauce,
removing the partly frozen sauce from said freezing surface,
mixing the partly frozen sauce to form a shapeable sauce,
forming said shapeable sauce into pellets, and
freezing the pellets.

The method according to the invention provides a gentle way of freezing sauce which has a first freezing step involving making the sauce shapeable and a second final freezing step. The sauce, is dosed in a layer, the water phase will freeze first and the solid matter in the sauce will increase the viscosity of the unfrozen sauce. Upon removing the partly frozen sauce from the freezing surface it is broken up allowing the unfrozen sauce of higher viscosity to be distributed around the frozen surfaces of the sauce. A mixing is then provided to improve the distribution of frozen and non-frozen sauce. When this is done a mixture is obtained which surprisingly can be shaped into pellets which substantially retain their shape. When thawing the pellets a sauce is obtained which has substantially the same viscosity as the sauce which was frozen into pellets.

In the present context pellets are: pellets or portions or nuggets or blocks. The size of these may vary depending on the application . A suitable size for panfrying meals is, 3 to 8 grams. For separate preparing, the sauces pellets are conveniently 12 to 30 grams. For catering, the pellet is e.g. 100 to 200 gram blocks.

In the present context a sauce is a substantially non-aerated liquid food material. It comprises fat and water and usually starch. It may also comprise flavouring agents such as salt, sugar, spices and agents to improve the colour. Other ingredients may be added such as vegetables, meat or fish pieces or lumps. The viscosity of the sauce may vary from very thin water-like viscosity to a thicker sauce which is still flowable or pumpable. The viscosity of the sauce is determined substantially by the starch and fat used and content thereof.

The method may be performed by dosing of sauce onto any freezer with a substantially plane horizontal freezing surface. Such freezers are e.g. plate freezers, a steel belt freezing conveyor or a cryogenic freezer. In a preferred embodiment of the invention a layer of sauce is dosed onto a contact freezer preferably covered with a plastic film which eases the removal of the film, and a gentle breaking up of the partly frozen sauce.

It is preferred that the sauce layer dosed onto the freezing surface is hardened on its underside while the sauce in the centre of the layer remains unfrozen. This can be accomplished by cooling the surface to sufficient low temperature so that the underside of the sauce that contacts the surface becomes frozen. Furthermore or alternatively, cooling means, e.g. cold air, may also be provided for a hardening of the sauce's upper surface. Advantageously, the sauce layer is crust frozen.

For an adjustment of temperature and viscosity of the mixture of partly frozen sauce, i.e. the sauce which has been dosed onto the freezing surface, additional unfrozen sauce may be added. When adding the additional unfrozen sauce, it is preferable to gently mix it into the mixture of the partly frozen sauce before or during the time it is mixed.

Advantageously, the thickness of the layer of sauce dosed in accordance with this embodiment of the invention is in the range of 5 to 20 mm. The sauce may conveniently be dosed on the whole width of the cooling surface or in stripes.

The temperature of the freezing surface is e.g. in the range of -10 to -100°C, however, preferably in the range of -20°C to -40°C. The sauce dosed onto the freezing surface is preferably at ambient temperature or is chilled.

The temperature at which the sauce is shapeable will depend on the composition of the sauce, e.g. starch, fat, and salt content. However, for most purposes sauce is shapeable at a temperature in the range of -2°C to -8°C, preferably from -3 to -6°C, more preferably -4°C.

The forming of the shapeable sauce is preferably done by extruding the sauce through a die and subsequently portioning the extrudate into pellets.

As discussed above, mixing of the partly frozen sauce should be gentle. This may be done by means of an auger. During the mixing of the sauce into a shapeable sauce additional cooling may take place but this is not a requirement.

Sauces which advantageously can be frozen into pellets with a method according to the invention are: cheese sauce e.g. Béchamel sauce, tomato sauces, sauces with meat e.g. Bolognese sauce. Ingredients may be added to the sauce preferably before or during the mixing of the sauce. They may be added e.g. after the mixing but before a possible extruding of the shapeable sauce. The ingredients may also be co-extruded with the shapeable sauce.

In a special embodiment, the invention relates to a method for freezing pellets of sauce, said method comprising
dosing a layer of sauce onto a freezing surface,
freezing said sauce on said surface to cause a crystallisation of ice crystals,
removing the frozen sauce from said freezing surface,
adding unfrozen sauce to the frozen sauce and mixing the unfrozen and frozen sauce to form a shapeable sauce,
forming said shapeable sauce into pellets, and
freezing the pellets.

In this embodiment of the invention the layer of sauce dosed onto the freezing surface should be thin e.g. in the range of 2 to 5 mm. If the layer is considerably thicker the breaking and blending of the layer is inconvenient and the sauce is subjected to too much mechanical work. This may damage the starch molecules.

The invention also relates to frozen pellets of sauce obtainable by the method described above. Additionally the invention relates to non-moulded and extruded frozen pellets of sauce obtainable by the method described above, whereby the thawed sauce has substantially the same viscosity as the sauce prior to freezing.

When mixing the frozen and unfrozen sauce, it is generally useful for 10 to 40% by weight of the sauce to not be solidified, i.e., 60 to 90% by weight of the sauce is frozen. The ratio of frozen and unfrozen sauce depends somewhat on the ingredients in the sauce. Typically, between 20 to 30% unfrozen sauce and 70 to 80% frozen sauce is used. For any particular sauce formulation, a person having ordinary skill in the art can conduct routine tests to determine the optimum amounts of frozen and unfrozen sauce that should be combined.

The present invention will now be described in further details with reference to the accompanying drawings.

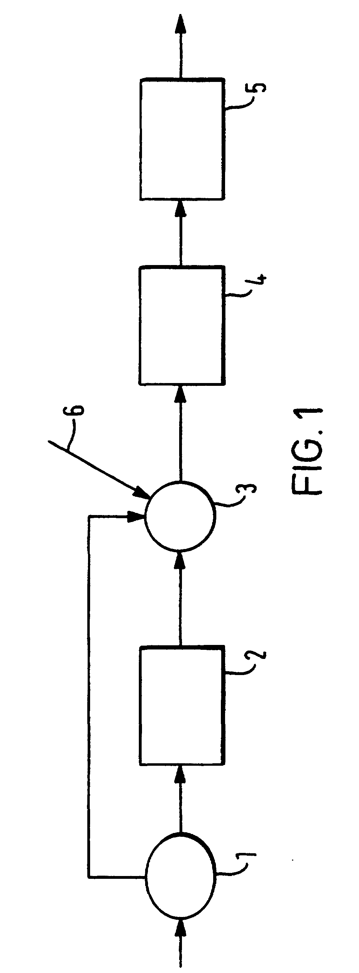

Fig. 1 is a schematic chart showing the steps of a method for freezing pellets according to the invention.

In Fig. 1 sauce is dosed from a supply 1 onto a freezing surface of freezer 2 in a layer. The sauce is partly frozen on said surface to cause a generation of ice crystals at the lower and upper surface of the layer and to increase in the viscosity of the unfrozen sauce. The partly frozen sauce is removed from said freezing surface and broken up and mixed in a mixer 3. In the mixer 3 additional unfrozen sauce may be supplied from the sauce supply 1 and additional food product particles may be added at 6. The sauce and the ingredients form a shapeable sauce mass. The shapeable sauce mass is formed by shaping means in 4, e.g. by extruding the mass through a die and cutting it into the final size pellets or portions. The pellets or portions are then passed onto after-freezing in a freezer 5 of conventional type e.g. belt or, spiral freezer or fluid bed freezer etc.

### EXAMPLE

Tested sauces: cheese sauce, Béchamel sauce, tomato sauce with pieces of tomato, and Bolongnese sauce.

As an example, the Béchamel sauce used was mixed from the following ingredients: Starch, dried egg white, milk powder, cheese and/or vegetable oil, and water. It consisted of (given in weight of the total béchamel sauce) :
7-11 % cold water soluble starch,
14-18 % egg white powder,
3% milk powder,
30 % vegetable oil
58 to 62 % water. Water is added in an amount sufficient to make the béchamel sauce pumpable.

Sauce at a temperature of approximately 4 °C was dosed in bands onto a plastic film on a plate-contact freezer. The dosing was performed by a pump. The thickness was approximately 5 mm. Bottom and top was frozen while the centre was still liquid. The band of partly frozen sauce was fed into an auger and gently broken up and mixed into a shapeable sauce mass. The temperature of the shapeable sauce is approximately -5°C The shapeable sauce was extruded through a die and cut into portions, and the portions frozen in a conventional freezing tunnel to -18°C.

The frozen portions of sauce were re-heated. It was not possible to detect any change in the viscosity of sauce compared with a sauce which had not been subjected to the freezing and shaping process. Neither were any changes in colour or texture detectable from the re-heated sauce.

## Claims

1. Method for freezing pellets of sauce, said method comprising
dosing a layer of sauce onto a freezing surface,
partly freezing said sauce on said surface to cause a generation of ice crystals and an increase in the viscosity of the unfrozen sauce,
removing the partly frozen sauce from said freezing surface,
mixing the partly frozen sauce to form a shapeable sauce,
forming said shapeable sauce into pellets, and
freezing the pellets.

2. A method according to claim 1, wherein the sauce layer dosed onto the freezing surface is hardened on its underside while the sauce in the centre of the layer remains unfrozen.

3. A method according to any of claims 1 and 2, wherein the sauce is hardened on its upper surface.

4. A method according to claims 2 and 3, wherein the sauce layer is crust frozen.

5. A method according to any of claims 1 to 4, wherein unfrozen sauce is added to the partly frozen sauce before or during mixing of the partly frozen sauce.

6. A method according to any of claims 1 to 5, wherein ingredients are added before or during or after the mixing of the sauce.

7. A method according to any of claims 1 to 6, wherein the forming of shapeable sauce mixture is done by extruding the shapeable sauce and portioning the extrudate into pellets.

8. A method according to any of claims 1 to 7, wherein the frozen and unfrozen sauce is cooled while being mixed.

9. A method according to any of claims 1 to 8, wherein the freezing surface has a temperature in the range of -20°C to -40°C.

10. A method according to any of claims 1 to 9, wherein the shapeable sauce has a temperature of -2°C to -8°C, preferably -4°C.

11. A method according to any of claims 1 to 10, wherein the freezing surface comprises a plastic sheet onto which the sauce is dosed.

12. A method according to any of claims 1 to 11, wherein the mixing is done by means of an auger.

13. A method according to any of claims 1 to 12, wherein the layer of sauce is cooled from above with cold air.

14. A method according to any of claims 1 to 13, wherein 10 to 40% by weight of the sauce is not frozen and is mixed with 60 to 90% by weight of frozen sauce.

15. Method for freezing pellets of sauce, said method comprising
dosing a layer of sauce onto a freezing surface,
freezing said sauce on said surface to cause a crystallisation of ice crystals,
removing the frozen sauce from said freezing surface,
adding unfrozen sauce to the frozen sauce and mixing the unfrozen and frozen sauce to form a shapeable sauce,
forming said shapeable sauce into pellets, and
freezing the pellets.

16. Frozen pellets of sauce obtainable by the method according to any of claims 1 to 15.

17. Extruded frozen pellets of sauce according to claim 16, whereby the thawed sauce has substantially the same viscosity as the sauce prior to freezing.

## Patentansprüche

1. Verfahren zum Gefrieren von Pellets aus Soße, wobei das Verfahren umfasst:
Dosieren einer Schicht aus Soße auf eine Gefrierfläche,
teilweises Gefrieren der Soße auf der Fläche, um die Entstehung von Eiskristallen und eine Erhöhung der Viskosität der ungefrorenen Soße zu bewirken,
Entfernen der teilweise gefrorenen Soße von der Gefrierfläche,
Mischen der teilweise gefrorenen Soße, um eine formbare Soße herzustellen,
Formen der formbaren Soße zu Pellets, und
Gefrieren der Pellets.

2. Verfahren nach Anspruch 1, wobei die auf die Gefrierfläche dosierte Soßenschicht an ihrer Unterseite erhärtet wird, während die Soße in der Mitte der Schicht ungefroren bleibt.

3. Verfahren nach einem der Ansprüche 1 und 2, wobei die Soße an ihrer Oberseite erhärtet wird.

4. Verfahren nach den Ansprüchen 2 und 3, wobei die Soßenschicht oberflächig gefroren wird.

5. Verfahren nach einem der Ansprüche 1 bis 4, wobei der teilweise gefrorenen Soße vor oder beim Mischen der teilweise gefrorenen Soße ungefrorene Soße zugesetzt wird.

6. Verfahren nach einem der Ansprüche 1 bis 5, wobei die Bestandteile vor oder bei oder nach dem Mischen der Soße zugesetzt werden.

7. Verfahren nach einem der Ansprüche 1 bis 6, wobei das Formen des formbaren Soßengemischs ausgeführt wird, indem die formbare Soße extrudiert wird und das Extrudat in Pellets portioniert wird.

8. Verfahren nach einem der Ansprüche 1 bis 7, wobei die gefrorene und die ungefrorene Soße während des Mischens gekühlt werden.

9. Verfahren nach einem der Ansprüche 1 bis 8, wobei die Gefrierfläche eine Temperatur im Bereich von -20°C bis -40°C hat.

10. Verfahren nach einem der Ansprüche 1 bis 9, wobei die formbare Soße eine Temperatur von -2°C bis -8°C, vorzugsweise -4°C, hat.

11. Verfahren nach einem der Ansprüche 1 bis 10, wobei die Gefrierfläche eine Kunststoffbahn umfasst, auf die die Soße dosiert wird.

12. Verfahren nach einem der Ansprüche 1 bis 11, wobei das Mischen mit einer Schnecke ausgeführt wird.

13. Verfahren nach einem der Ansprüche 1 bis 12, wobei die Schicht aus Soße von oben mit kalter Luft gekühlt wird.

14. Verfahren nach einem der Ansprüche 1 bis 13, wobei 10 bis 40 Gew.-% der Soße nicht gefroren ist und mit 60 bis 90 Gew.-% gefrorener Soße gemischt wird.

15. Verfahren zum Gefrieren von Pellets aus Soße, wobei das Verfahren umfasst:
Dosieren einer Schicht aus Soße auf eine Gefrierfläche,
Gefrieren der Soße auf der Fläche, um eine Kristallisation von Eiskristallen zu bewirken,
Entfernen der gefrorenen Soße von der Gefrierfläche,
Zusetzen ungefrorener Soße zu der gefrorenen Soße und Mischen der ungefrorenen und der gefrorenen Soße, um eine formbare Soße herzustellen,
Formen der formbaren Soße zu Pellets, und
Gefrieren der Pellets.

16. Gefrorene Pellets aus Soße, die mit dem Verfahren nach einem der Ansprüche 1 bis 15 hergestellt werden können.

17. Extrudierte, gefrorene Pellets aus Soße nach Anspruch 16, wobei die aufgetaute Soße im Wesentlichen die gleiche Viskosität hat wie die Soße vor dem Gefrieren.

## Revendications

1. Procédé pour la congélation de boulettes de sauce, ledit procédé comprenant
le dosage d'une couche de sauce sur une surface de congélation,
la congélation partielle de ladite sauce sur ladite surface pour occasionner une production de cristaux de glace et une augmentation de la viscosité de la sauce non congelée,
le prélèvement de la sauce partiellement congelée de ladite surface de congélation,
le mélange de la sauce partiellement congelée pour former une sauce pouvant être façonnée,
le façonnage de ladite sauce pouvant être façonnée en boulettes, et
la congélation des boulettes.

2. Procédé selon la revendication 1, dans lequel la couche de sauce dosée sur la surface de congélation est durcie sur son côté inférieur alors que la sauce au centre de la couche reste non congelée.

3. Procédé selon l'une quelconque des revendications 1 et 2, dans lequel la sauce est durcie sur sa surface supérieure.

4. Procédé selon les revendications 2 et 3, dans lequel la couche de sauce est congelée en croûte.

5. Procédé selon l'une quelconque des revendications 1 à 4, dans lequel de la sauce non congelée est ajoutée à la sauce partiellement congelée avant ou pendant le mélange de la sauce partiellement congelée.

6. Procédé selon l'une quelconque des revendications 1 à 5, dans lequel des ingrédients sont ajoutés avant ou pendant ou après le mélange de la sauce.

7. Procédé selon l'une quelconque des revendications 1 à 6, dans lequel le façonnage d'un mélange de sauce pouvant être façonnée est réalisé par extrusion de la sauce pouvant être façonnée et par répartition de l'extrudé en boulettes.

8. Procédé selon l'une quelconque des revendications 1 à 7, dans lequel la sauce congelée et non congelée est refroidie tout en étant mélangée.

9. Procédé selon l'une quelconque des revendications 1 à 8, dans lequel la surface de congélation a une température dans l'intervalle de -20°C à -40°C.

10. Procédé selon l'une quelconque des revendications 1 à 9, dans lequel la sauce pouvant être façonnée présente une température de -2°C à -8°C, de préférence de -4°C.

11. Procédé selon l'une quelconque des revendications 1 à 10, dans lequel la surface de congélation comprend une feuille en matière plastique sur laquelle la sauce est dosée.

12. Procédé selon l'une quelconque des revendications 1 à 11, dans lequel le mélange est réalisé au moyen d'une mèche.

13. Procédé selon l'une quelconque des revendications 1 à 12, dans lequel la couche de sauce est refroidie à partir du dessus avec de l'air froid.

14. Procédé selon l'une quelconque des revendications 1 à 13, dans lequel de 10 à 40 % en poids de la sauce ne sont pas congelés et sont mélangés avec de 60 à 90 % en poids de sauce congelée.

15. Procédé pour la congélation de boulettes de sauce, ledit procédé comprenant
le dosage d'une couche de sauce sur une surface de congélation,
la congélation de ladite sauce sur ladite surface pour occasionner une cristallisation de cristaux de glace,
le prélèvement de la sauce congelée de ladite surface de congélation,
l'addition de sauce non congelée à la sauce congelée et le mélange de la sauce non congelée et congelée pour former une sauce pouvant être façonnée,
le façonnage de ladite sauce pouvant être façonnée en boulettes, et
la congélation des boulettes.

16. Boulettes de sauce congelées pouvant être obtenues par le procédé selon l'une quelconque des revendications 1 à 15.

17. Boulettes de sauce extrudées congelées selon la revendication 16, la sauce décongelée présente par-là pratiquement la même viscosité que la sauce avant la congélation.
